# EUROPEAN PATENT APPLICATION

(11) **EP 4 321 578 A1**
(43) Date of publication of application: **14.02.2024**
(21) Application number: 22784508.8
(22) Date of filing: 23.03.2022
(51) Int. Cl.: C08L 83/07, C08K 3/36, C08K 7/00, C08L 83/05, C08L 83/06

(54) **SILICONE COMPOSITION AND CURED PRODUCT THEREOF**

(30) Priority: 06.04.2021 JP 2021064512
(71) Applicant: SHIN-ETSU CHEMICAL CO., LTD., Tokyo 1000005 (JP)
(72) Inventor: ISHIDA Kazuma, Annaka-shi, Gunma 379-0224 (JP); SAKAMOTO Akira, Annaka-shi, Gunma 379-0224 (JP)
(74) Representative: Ter Meer Steinmeister & Partner
(86) International application number: PCT/JP2022/013422
(87) International publication number: WO 2022/215523

(57) **Abstract**

This silicone composition contains:
100 parts by mass of (A) an organopolysiloxane which has at least one silicon atom-bonded alkenyl group per molecule and has a viscosity at 25°C of 0.01-100 Pa s;
0.1-100 parts by mass of (B) an organohydrogenpolysiloxane having at least one silicon atom-bonded hydrogen atom per molecule;
(C) an addition reaction catalyst; and
10-500 parts by mass of (D) two or more types of a solid inorganic filler which have an average particle diameter of 100 µm or less and have mutually different shapes. This silicone composition yields a cured product which has a high storage elastic modulus at high frequencies and a low storage elastic modulus at low frequencies without the use of a hollow inorganic filler.

## Description

### TECHNICAL FIELD

This invention relates to a silicone composition and a cured product thereof.

### BACKGROUND ART

In the recent electric and electronic field, development works on mobile terminals such as smartphones, tablet terminals and wearable devices are advanced toward higher performance. Parts mounted on such terminals are accordingly tailored toward smaller size and higher performance.

The parts on mobile terminals can undergo positional shifts by vibration of terminals or be broken by strong shocks associated with falls or faults. It is then a common practice to protect the parts with soft members against slow stresses like vibration and with hard members against fast stresses like shocks (see Patent Document 1).

Meanwhile, materials having such properties that their viscoelasticity varies with the frequency of stress are liquid or greasy compositions heavily loaded with particles as disclosed in Patent Document 2. These compositions are susceptible to sags and runs and flow away unless sealed. The compositions are thus difficult to protect parts by themselves and awkward to use from the design aspect.

Under the circumstances, Patent Document 3 describes the invention of a material having such viscoelasticity that parts may be protected against shocks by rubber-like solids. In order that a material of smaller size utilize such properties to comply with devices of smaller size in which the material is used, a material experiencing a greater change of viscoelasticity with frequency is needed.

Patent Document 4 describes that a silicone composition containing a hollow inorganic filler yields a cured product having a high storage elastic modulus at a high frequency. There remains a problem that since the hollow inorganic filler can be broken during molding or upon receipt of shocks, the cured product sometimes loses mechanical strength.

### PRIOR ART DOCUMENTS

### PATENT DOCUMENTS

Patent Document 1: JP-A 2011-074973
Patent Document 2: JP 3867898
Patent Document 3: JP-A 2018-104615
Patent Document 4: JP-A 2021-046464

### SUMMARY OF INVENTION

### TECHNICAL PROBLEM

An object of the invention, which has been made under the above-mentioned circumstances, is to provide a silicone composition which yields a cured product having a high storage elastic modulus at high frequency and a low storage elastic modulus at low frequency though it does not use a hollow inorganic filler.

### SOLUTION TO PROBLEM

Making extensive investigations to attain the above object, the inventors have found that a silicone composition containing at least two non-hollow inorganic fillers of different shape yields a cured product having a high storage elastic modulus at high frequency and a low storage elastic modulus at low frequency. The invention is predicated on this finding.

The invention is defined below.
1. A silicone composition comprising
   (A) 100 parts by weight of an organopolysiloxane containing at least one silicon-bonded alkenyl group per molecule and having a viscosity of 0.01 to 100 Pa s at 25°C,
   (B) 0.1 to 100 parts by weight of an organohydrogenpolysiloxane containing at least one silicon-bonded hydrogen atom per molecule,
   (C) an addition reaction catalyst, and
   (D) 10 to 500 parts by weight of at least two solid inorganic fillers of different shape having an average particle size of up to 100 µm.
2. The silicone composition of 1, further comprising (E) 1 to 100 parts by weight of an organopolysiloxane having the formula (1): 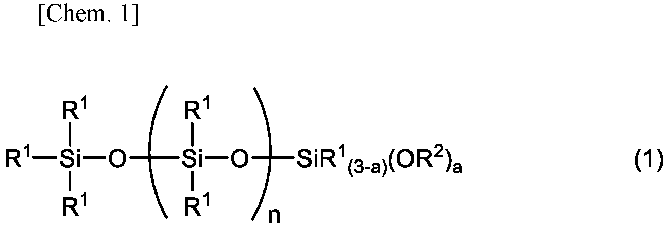 wherein R¹ is each independently a C₁-C₁₀ substituted or unsubstituted monovalent hydrocarbon group free of an addition reactive carbon-carbon bond, R² is each independently an alkyl group, alkoxyalkyl group, alkenyl group or acyl group, n is an integer of 2 to 100, and a is an integer of 1 to 3.
3. The silicone composition of 1 or 2 wherein the solid inorganic fillers contain at least one spherical inorganic filler.
4. The silicone composition of any one of 1 to 3 wherein the solid inorganic fillers contain at least one non-spherical inorganic filler.
5. The silicone composition of any one of 1 to 4 wherein the solid inorganic fillers contain crystalline silica and fused silica.
6. A silicone cured product obtained by curing the silicone composition of any one of 1 to 5.
7. The silicone cured product of 6 wherein a value of (storage elastic modulus at frequency 100 Hz)/(storage elastic modulus at frequency 0.1 Hz) is at least 5.0.
8. The silicone cured product of 6 or 7, having a hardness of at least 5 as measured by Durometer Type A.
9. A shock absorber comprising the silicone cured product of any one of 6 to 8.
10. An electronic part comprising the shock absorber of 9.

### ADVANTAGEOUS EFFECTS OF INVENTION

The silicone composition of the invention yields a cured product which has such a high storage elastic modulus upon receipt of shocks by falls that it may protect inside precision parts against shocks, and has such a low storage elastic modulus upon receipt of vibrations that it may prevent the parts from positional shifts.

The cured product exhibits a greater change of storage elastic modulus than in the prior art, so that a material of smaller size may achieve these properties to a full extent.

The cured product having such properties is quite useful in those devices to be reduced in size like smartphones and smartwatches.

### DESCRIPTION OF EMBODIMENTS

Now the invention is described in detail.

One embodiment of the invention is a silicone composition comprising
(A) an organopolysiloxane containing at least one silicon-bonded alkenyl group per molecule and having a viscosity of 0.01 to 100 Pa·s at 25°C,
(B) an organohydrogenpolysiloxane containing at least one silicon-bonded hydrogen atom per molecule,
(C) an addition reaction catalyst, and
(D) at least two solid inorganic fillers of different shape having an average particle size of up to 100 µm.

### [1] Component (A)

Component (A) is an organopolysiloxane containing at least one silicon-bonded alkenyl group per molecule and having a viscosity at 25°C of 0.01 to 100 Pa s, preferably 0.1 to 10 Pa s, more preferably 0.5 to 10 Pa s.

If the viscosity is less than 0.01 Pa·s, the composition loses storage stability. If the viscosity exceeds 100 Pa·s, the composition has too high a viscosity to mold. It is noted that the viscosity is measured by a rotational viscometer (the same applies, hereinafter).

The organopolysiloxane is not particularly limited insofar as it meets the viscosity and alkenyl content defined above. Any well-known organopolysiloxanes may be used. Its structure may be either linear or branched. Also, a mixture of two or more organopolysiloxanes having different viscosities is acceptable.

The silicon-bonded alkenyl group has preferably 2 to 10 carbon atoms, more preferably 2 to 8 carbon atoms although the carbon count is not particularly limited. Examples of the alkenyl group include vinyl, allyl, 1-butenyl, and 1-hexenyl. Of these, vinyl is preferred for ease of synthesis and cost.

The alkenyl group may be present at the end and/or a midway position of the molecular chain of the organopolysiloxane. It is preferred for flexibility that the alkenyl groups be attached to only the ends of the molecular chain.

Organic groups besides the silicon-bonded alkenyl group include monovalent hydrocarbon groups of 1 to 20 carbon atoms, preferably 1 to 10 carbon atoms.

Examples of the monovalent hydrocarbon group include alkyl groups such as methyl, ethyl, n-propyl, n-butyl, n-hexyl, and n-dodecyl; aryl groups such as phenyl; and aralkyl groups such as 2-phenylethyl and 2-phenylpropyl.

In the hydrocarbon group, some or all of the hydrogen atoms may be substituted by halogen atoms such as chlorine, fluorine and bromine. Examples of the halogen-substituted group include halogenated monovalent hydrocarbon groups such as fluoromethyl, bromoethyl, chloromethyl and 3,3,3-trifluoropropyl.

It is preferred for ease of synthesis and cost that at least 90 mol% of the organic groups be methyl.

Understandably, component (A) is preferably an organopolysiloxane capped at both ends with dimethylvinylsilyl, more preferably a dimethylpolysiloxane capped at both ends with dimethylvinylsilyl.

It is noted that component (A) may be used alone or in admixture of two or more.

### [2] Component (B)

Component (B) is an organohydrogenpolysiloxane containing at least one silicon-bonded hydrogen atom per molecule.

The molecular structure of the organohydrogenpolysiloxane as component (B) may be linear, branched or network. Although its kinematic viscosity is not particularly limited, the kinematic viscosity at 25°C is preferably 1 to 10,000 mm²/s, more preferably 1 to 1,000 mm²/s. Notably, the kinematic viscosity is measured by a Cannon Fenske viscometer.

Organic groups besides the silicon-bonded hydrogen atom in component (B) are preferably groups of 1 to 10 carbon atoms exclusive of alkenyl groups. Examples include alkyl groups such as methyl, ethyl, n-propyl, n-butyl, n-hexyl, and n-dodecyl; aryl groups such as phenyl; and aralkyl groups such as 2-phenylethyl and 2-phenylpropyl. In the hydrocarbon group, some or all of the hydrogen atoms may be substituted by halogen atoms such as chlorine, fluorine and bromine. Examples of the halogen-substituted group include halogenated monovalent hydrocarbon groups such as fluoromethyl, bromoethyl, chloromethyl and 3,3,3-trifluoropropyl.

It is preferred for ease of synthesis and cost that at least 90 mol% of the organic groups be methyl.

In particular, component (B) preferably contains an organohydrogenpolysiloxane having the formula (2). 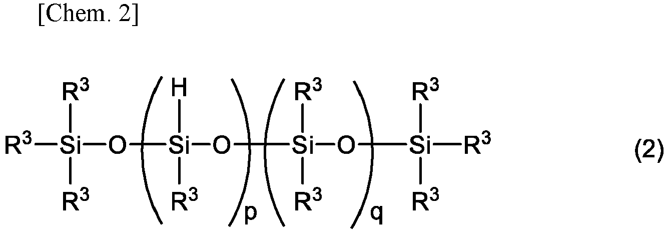 In the formula, the arrangement of siloxane units within the parentheses is arbitrary.

In formula (2), p and q are positive integers, and p+q is an integer of 10 to 100, preferably 20 to 60. The range of p+q ensures that the organohydrogenpolysiloxane has a suitable viscosity to handle and inhibits the risk that its volatilization causes contact and other failures when used with electronic parts.

The value of p/(p+q) is preferably in a range of 0.01 to 0.5, more preferably 0.05 to 0.4. When the value of p/(p+q) is in the range, crosslinking takes place to a full extent, inhibiting the risk that unreacted Si-H groups remaining after initial cure bring about excessive crosslinking reaction with the lapse of time.

R³ is each independently a C₁-C₆ alkyl group, which may have a linear, branched or cyclic structure.

Suitable alkyl groups include methyl, ethyl, n-propyl, n-butyl, n-pentyl, and n-hexyl. It is preferred for ease of synthesis and cost that at least 90 mol% of R³ be methyl.

Also preferably, component (B) contains an organohydrogenpolysiloxane having the formula (3).

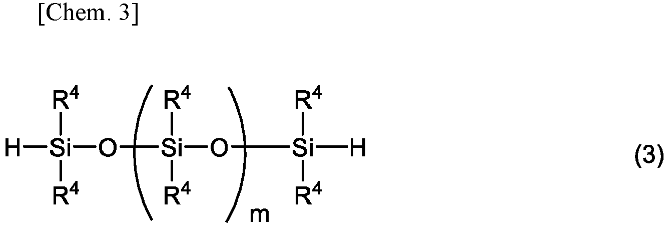

In formula (3), R⁴ is each independently a C₁-C₆ alkyl group. Examples of the alkyl group are as exemplified above for R³. It is also preferred for ease of synthesis and cost that at least 90 mol% of R⁴ be methyl.

The subscript m is an integer of 5 to 1,000, preferably 10 to 100. The range of m ensures that the organohydrogenpolysiloxane has a suitable viscosity to handle and inhibits the risk that its volatilization causes contact and other failures when used with electronic parts.

Preferred examples of component (B) used herein include organohydrogenpolysiloxanes having the following formulae, but are not limited thereto. 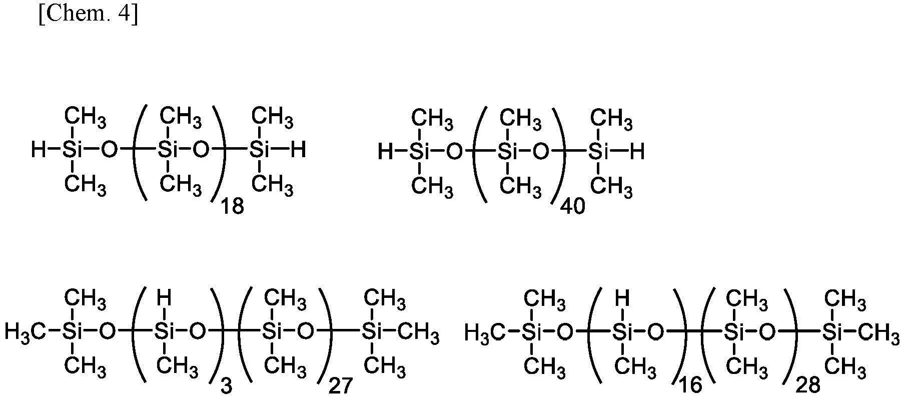 In the formula, the arrangement of siloxane units within the parentheses is arbitrary.

The amount of component (B) blended is 0.1 to 100 parts by weight, preferably 1 to 10 parts by weight per 100 parts by weight of the organopolysiloxane as component (A), in order that the composition be fully curable.

It is noted that component (B) may be used alone or in admixture of two or more.

### [3] Component (C)

Component (C) is an addition reaction catalyst which is a platinum group metal based catalyst. The catalyst may be selected from any well-known ones as long as it promotes addition reaction between alkenyl groups in component (A) and Si-H groups in component (B).

Examples of the catalyst include platinum group metals alone such as platinum (including platinum black), rhodium and palladium; platinum chlorides, chloroplatinic acids and chloroplatinates such as H₂PtCl₄·nH₂O, H₂PtCl₆·nH₂O, NaHPtCl₆·nH₂O, KHPtCl₆·nH₂O, Na₂PtCl₆·nH₂O, K₂PtCl₄·nH₂O, PtCl₄·nH₂O, PtCl₂ and Na₂HPtCl₄·nH₂O, wherein n is an integer of 0 to 6, preferably 0 or 6; alcohol-modified chloroplatinic acids; chloroplatinic acid-olefin complexes; supported catalysts comprising platinum group metals such as platinum black and palladium on supports of alumina, silica, and carbon; rhodium-olefin complexes; chlorotris(triphenylphosphine)rhodium (known as Wilkinson's catalyst); and complexes of platinum chlorides, chloroplatinic acids and chloroplatinates with vinyl-containing siloxanes. The platinum group metal based catalyst may be used alone or in admixture of two or more.

Of these, platinum or platinum compounds are preferred.

The amount of component (C) blended is a catalytic amount, that is, an amount sufficient to promote reaction of component (A) and the like with component (B), which may be determined as appropriate depending on the desired cure rate.

Specifically, the amount of component (C) is 0.1 to 7,000 ppm, preferably 1 to 6,000 ppm by weight of platinum group metal based on the weight of component (A). If the amount of component (C) is less than 0.1 ppm by weight of platinum group metal, the catalytic effect may not be exerted. If the amount exceeds 7,000 ppm, no further improvements in cure rate may be expected.

### [4] Component (D)

Component (D) is at least two solid inorganic fillers of different shape having an average particle size of up to 100 µm. This component is effective for increasing the storage elastic modulus at high frequency.

The average particle size of inorganic filler is up to 100 µm as viewed from the shock protection ability of a cured product, and preferably 1 to 90 µm, more preferably 1 to 80 µm for further enhancement of the shock protection ability.

It is noted that the average particle size is determined as D₅₀ (a particle diameter at cumulative 50% by volume or median diameter) in volume basis particle size distribution measurement by laser light diffractometry.

It is critical in the invention to use inorganic fillers of different shape in combination, preferably in combination of spherical shape and non-spherical shape, more preferably combination of spherical shape and crystalline shape. With respect to the combination of inorganic fillers, no particular limit is imposed as long as two or more types of different shape are included. Although a combination of inorganic fillers of different materials is acceptable, inorganic fillers of a single material are preferred in view of uniformity and change with time of the composition.

Although the true specific gravity of inorganic fillers is not particularly limited, the true specific gravity is preferably 0.1 to 3.0 when it is taken into account to facilitate the preparation and to reduce the weight of the composition.

Examples of component (D) include metal oxides such as silica, alumina and titanium oxide. Of these, silica and alumina are preferred for availability and effective filling in silicone.

The amount of component (D) blended is 10 to 500 parts by weight per 100 parts by weight of the organopolysiloxane as component (A). If the amount is less than 10 parts by weight, the composition may fail to exert the shock protecting effect. If the amount exceeds 500 parts by weight, the composition has poor mechanical properties.

### [5] Component (E)

The silicone composition may include (E) an organopolysiloxane having the formula (1). Component (E) plays the role of reducing the viscosity of the composition for improving the filling of a solid inorganic filler.

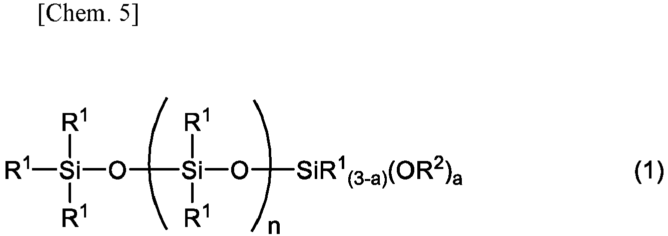

In formula (1), R¹ is each independently a C₁-C₁₀, preferably C₁-C₆, more preferably C₁-C₃, substituted or unsubstituted, monovalent hydrocarbon group free of an addition reactive carbon-carbon bond.

Suitable monovalent hydrocarbon groups include straight, branched or cyclic alkyl groups, aryl groups, aralkyl groups, and halogenated alkyl groups.

Examples of the straight alkyl group include methyl, ethyl, n-propyl, n-hexyl and n-octyl.

Examples of the branched alkyl group include isopropyl, isobutyl, tert-butyl and 2-ethylhexyl.

Examples of the cyclic alkyl group include cyclopentyl and cyclohexyl.

Examples of the aryl group include phenyl and tolyl.

Examples of the aralkyl group include 2-phenylethyl and 2-methyl-2-phenylethyl.

Examples of the halogenated alkyl group include 3,3,3-trifluoropropyl, 2-(nonafluorobutyl)ethyl and 2-(heptadecafluorooctyl)ethyl.

Inter alia, R¹ is preferably a C₁-C₃ straight alkyl group, with methyl being more preferred.

R² is each independently an alkyl, alkoxyalkyl, alkenyl or acyl group of 1 to 5 carbon atoms.

Examples of the alkyl group are as exemplified above for R¹.

Examples of the alkoxyalkyl group include methoxyethyl and methoxypropyl.

Examples of the acyl group include acetyl and octanoyl.

Inter alia, R² is preferably a C₁-C₃ straight alkyl group, with methyl and ethyl being more preferred.

The subscript n is an integer of 2 to 100, preferably 5 to 80, and "a" is an integer of 1 to 3, preferably 3.

Component (E) has a viscosity at 25°C of 0.005 to 10 Pa s, more preferably 0.005 to 1 Pa·s for preventing the composition from bleeding and in view of moldability although the viscosity is not particularly limited.

Examples of component (E) include organopolysiloxanes having the following formulae, but are not limited thereto.

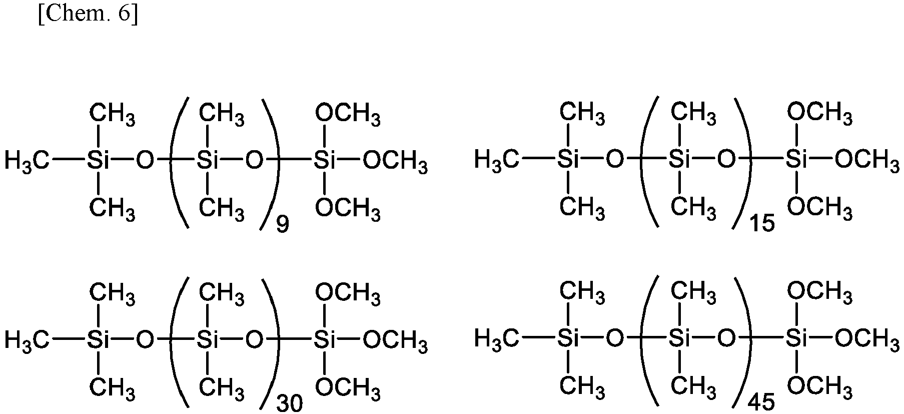

When used, the amount of component (E) blended is preferably 1 to 100 parts by weight, more preferably 1 to 50 parts by weight per 100 parts by weight of component (A), from the aspect of curability.

It is noted that component (E) may be used alone or in admixture of two or more.

### [6] Other components

Besides the foregoing components (A) to (E), the silicone composition may contain any well-known additives as long as the objects of the invention are not impaired.

Suitable additives include, for example, reaction inhibitors, hindered phenol-based antioxidants, fillers such as calcium carbonate, pigments, and dyes.

The reaction inhibitor is any compound capable of inhibiting the catalytic activity of component (C) for retarding the progress of curing reaction at room temperature for thereby prolonging the shelf life and pot life of the composition. It may be selected from well-known reaction inhibitors.

Examples of the reaction inhibitor include hydroxy-containing acetylene compounds such as 1-ethynyl-1-cyclohexanol and 3-butyn-1-ol, various nitrogen compounds, organic phosphorus compounds, oxime compounds, and organic chlorine compounds. Of these, hydroxy-containing acetylene compounds are preferred because they are non-corrosive to metals.

The reaction inhibitor may be diluted with an organic solvent such as toluene, xylene or isopropyl alcohol prior to use, in order to facilitate its dispersion in the silicone resin.

### [7] Method of preparing silicone composition

The method of preparing the inventive silicone composition is not particularly limited and may accord with any well-known techniques. The composition may be prepared by mixing components (A) to (D) and optional component (E) and other components.

Specifically, a one-pack type composition may be prepared by charging a gate mixer with components (A), (D) and optionally (E), which are mixed at a predetermined temperature (e.g., 25°C) for a predetermined time (e.g., 1 hour) under reduced pressure. After the mixture is cooled, component (C) and a reaction inhibitor are added thereto and mixed at a predetermined temperature (e.g., 25°C) for a predetermined time (e.g., 1 hour). Thereafter, component (B) is added thereto and mixed at a predetermined temperature (e.g., 25°C) for a predetermined time (e.g., 30 minutes).

Alternatively, a two-pack type composition may be formulated in any combination of components as long as components (A), (B) and (C) do not coexist in combination.

For example, a two-pack type composition consisting of agents A and B may be prepared as follows. A gate mixer is charged with components (A) and (D) and optionally (E), which are mixed at a predetermined temperature (e.g., 25°C) for a predetermined time (e.g., 1 hour) under reduced pressure. After the mixture is cooled, component (C) is added thereto and mixed at a predetermined temperature (e.g., 25 °C) for a predetermined time (e.g., 30 minutes), yielding agent A. Separately, a gate mixer is charged with components (A) and (D) and optionally (E), which are mixed at a predetermined temperature (e.g., 150°C) for a predetermined time (e.g., 1 hour) under reduced pressure. After the mixture is cooled, a reaction inhibitor is added thereto and mixed at a predetermined temperature (e.g., 25°C) for a predetermined time (e.g., 30 minutes). Then component (B) is added thereto and mixed at a predetermined temperature (e.g., 25°C) for a predetermined time (e.g., 30 minutes), yielding agent B.

The silicone composition of one-pack type may be stored for a long term by refrigeration or freezing whereas the silicone composition of two-pack type may be stored for a long term at room temperature.

Although the viscosity of the silicone composition is not particularly limited, the viscosity is preferably 1 to 400 Pa·s, more preferably 10 to 300 Pa·s at 25°C in view of dispersion of inorganic fillers and handling of the silicone composition.

### [8] Silicone cured product

A cured product is obtained by curing the silicone composition defined above.

The curing conditions are not particularly limited and may be similar to the conditions used for prior art well-known curable silicone compositions.

Specifically, after the silicone composition is cast to a part, it may be allowed to cure naturally with the heat generated from the part or be cured by positive heating. In the latter case, the heat curing conditions include a temperature of preferably 60 to 180°C, more preferably 80 to 150°C and a time of preferably 0.1 to 3 hours, more preferably 0.5 to 2 hours.

The cured product of the silicone composition thus obtained typically has a hardness of up to 40 as measured by Durometer Type A according to JIS K 6253-3: 2012 because it shows a flexible behavior under slow deformation and minimizes the stress applied to the part in contact therewith.

The cured product has a storage elastic modulus of preferably at least 2.0 MPa, more preferably from 2.0 to 5.0 MPa at a frequency of 100 Hz.

Further, the cured product has a storage elastic modulus of less than 1.0 MPa, more preferably from 0.4 to less than 1.0 MPa at a frequency of 0.1 Hz.

Additionally, the cured product has a ratio of (storage elastic modulus at frequency 100 Hz)/(storage elastic modulus at frequency 0.1 Hz) which is preferably at least 5.0, more preferably at least 5.5. The ranges of elastic modulus ensure that the cured product is suited as a shock absorber. From the aspect of protecting parts from shocks, the cured product has a hardness of preferably at least 5, more preferably at least 10 as measured by Durometer Type A.

### EXAMPLES

Examples and Comparative Examples are given below by way of illustration of the invention and not by way of limitation. The components used herein are shown below.

Component (A)
   - A-1: Dimethylpolysiloxane capped at both ends with dimethylvinylsilyl, having a viscosity of 5 Pa·s at 25°C
   - A-2: Dimethylpolysiloxane capped at both ends with dimethylvinylsilyl, having a viscosity of 1 Pa·s at 25°C
Component (B)
   - B-1: Organohydrogensiloxane of the following formula 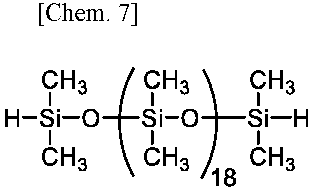
   - B-2: Organohydrogensiloxane of the following formula 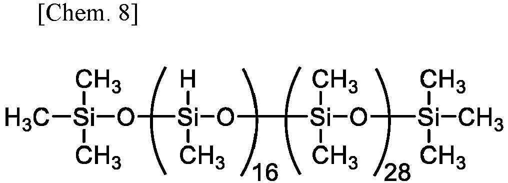 In the formula, the arrangement of siloxane units within the parentheses is arbitrary.
Component (C)
   - C-1: Dimethylpolysiloxane solution of platinum-divinyltetramethyldisiloxane complex (dissolved in the same dimethylpolysiloxane as A-2, containing 1% of platinum atom)
Component (D)
   - D-1: fused (spherical) silica having an average particle size of 5 µm
   - D-2: crystalline (non-spherical) silica having an average particle size of 4 µm
   - D-3: crystalline (non-spherical) silica having an average particle size of 6 µm
   - D-4: fused (spherical) silica having an average particle size of 15 µm
   - D-5: spherical alumina having an average particle size of 3 µm
   - D-6: ground (non-spherical) alumina having an average particle size of 1 µm
Component (E)
   - E-1: Organopolysiloxane of the following formula 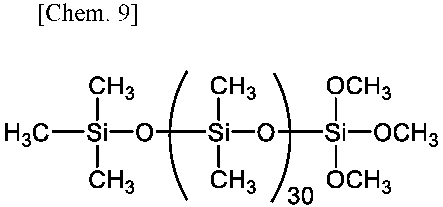
Other component
   - F-1: 1-ethynyl-1-cyclohexanol

### [Examples 1 to 6 and Comparative Examples 1 to 3]

A 5-L gate mixer (5-L planetary mixer by Inoue Mfg. K.K.) was charged with components (A), (D) and (E), which were mixed at 25°C for 1 hour under reduced pressure. Then component (C) was added thereto and mixed at 25°C for 30 minutes. Thereafter reaction inhibitor F-1 was added thereto and mixed at 25°C for 30 minutes. Finally, component (B) was added thereto and mixed at 25°C for 30 minutes. The amounts of components blended are shown in Table 1.

A cured product obtained by curing each of the resulting compositions was measured and evaluated for the following physical properties. The results are also shown in Table 1.

### (1) Hardness

The silicone composition was press cured at 120°C for 10 minutes and further heated in an oven at 120°C for 50 minutes, obtaining a silicone sheet of 2.0 mm thick. Three silicone sheets were overlaid into a laminate, which was measured for hardness by type A Durometer according to JIS K 6253-3: 2012.

### (2) Storage elastic modulus

The silicone composition was press cured at 120°C for 10 minutes and further heated in an oven at 120°C for 50 minutes, obtaining a silicone sheet of 2.0 mm thick. The silicone sheet was measured for viscoelasticity by Rheogel-E4000 (UBM Co., Ltd.) under conditions including tensile mode and sine wave distortion, evaluating a storage elastic modulus at frequency 0.1 Hz and a storage elastic modulus at frequency 100 Hz.

**[Table 1]**

| | | | Example | | | | | | Comparative Example | |
|---|---|---|---|---|---|---|---|---|---|---|
| | | | 1 | 2 | 3 | 4 | 5 | 6 | 1 | 2 |
| Blending amount (pbw) | Component (A) | A-1 | 100 | 100 | - | 100 | 100 | 100 | 100 | 100 |
| | | A-2 | - | - | 100 | - | - | - | - | - |
| | Component (B) | B-1 | 3.4 | 3.4 | 3.4 | 3.4 | 3.4 | 3.4 | 3.4 | 3.4 |
| | | B-2 | 0.27 | 0.27 | 0.27 | 0.27 | 0.27 | 0.27 | 0.27 | 0.27 |
| | Component (C) | C-1 | 0.05 | 0.05 | 0.05 | 0.05 | 0.05 | 0.05 | 0.05 | 0.05 |
| | Component (D) | D-1 | 280 | 315 | 280 | 280 | - | - | 350 | - |
| | | D-2 | 70 | 35 | 70 | - | 70 | - | - | 350 |
| | | D-3 | - | - | - | 70 | - | - | - | - |
| | | D-4 | - | - | - | - | 280 | - | - | - |
| | | D-5 | - | - | - | - | - | 490 | - | - |
| | | D-6 | - | - | - | - | - | 120 | - | - |
| | Component (E) | E-1 | 2.7 | 2.7 | 2.7 | 2.7 | 2.7 | 2.7 | 2.7 | 2.7 |
| | Component (F) | F-1 | 0.03 | 0.03 | 0.03 | 0.03 | 0.03 | 0.03 | 0.03 | 0.03 |
| Hardness (Type A) | | | 26 | 14 | 23 | 27 | 18 | 19 | 21 | 23 |
| Storage elastic modulus | E'@ 0.1Hz (Mpa) | | 0.73 | 0.51 | 0.41 | 0.76 | 0.82 | 1.1 | 1.1 | 1.0 |
| | E'@ 100Hz (Mpa) | | 4.6 | 3.8 | 2.2 | 4.8 | 4.9 | 6.7 | 5.2 | 3.6 |
| | E'@ 100Hz / E' @0.1Hz | | 6.3 | 7.5 | 5.5 | 6.3 | 5.9 | 5.9 | 4.8 | 3.6 |

As is evident from Table 1, the cured products obtained by curing the silicone compositions of Examples 1 to 6 have a value of (storage elastic modulus at frequency 100 Hz)/(storage elastic modulus at frequency 0.1 Hz) which is relatively high in the range of from 5.5 to 7.5, indicating better properties.

## Claims

1. A silicone composition comprising
(A) 100 parts by weight of an organopolysiloxane containing at least one silicon-bonded alkenyl group per molecule and having a viscosity of 0.01 to 100 Pa s at 25°C,
(B) 0.1 to 100 parts by weight of an organohydrogenpolysiloxane containing at least one silicon-bonded hydrogen atom per molecule,
(C) an addition reaction catalyst, and
(D) 10 to 500 parts by weight of at least two solid inorganic fillers of different shape having an average particle size of up to 100 µm.

2. The silicone composition of claim 1, further comprising (E) 1 to 100 parts by weight of an organopolysiloxane having the formula (1): 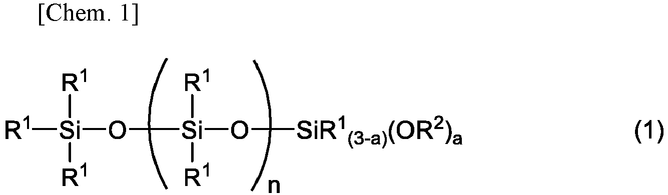 wherein R¹ is each independently a C₁-C₁₀ substituted or unsubstituted monovalent hydrocarbon group free of an addition reactive carbon-carbon bond, R² is each independently an alkyl group, alkoxyalkyl group, alkenyl group or acyl group, n is an integer of 2 to 100, and a is an integer of 1 to 3.

3. The silicone composition of claim 1 or 2 wherein the solid inorganic fillers contain at least one spherical inorganic filler.

4. The silicone composition of any one of claims 1 to 3 wherein the solid inorganic fillers contain at least one non-spherical inorganic filler.

5. The silicone composition of any one of claims 1 to 4 wherein the solid inorganic fillers contain crystalline silica and fused silica.

6. A silicone cured product obtained by curing the silicone composition of any one of claims 1 to 5.

7. The silicone cured product of claim 6 wherein a value of (storage elastic modulus at frequency 100 Hz)/(storage elastic modulus at frequency 0.1 Hz) is at least 5.0.

8. The silicone cured product of claim 6 or 7, having a hardness of at least 5 as measured by Durometer Type A.

9. A shock absorber comprising the silicone cured product of any one of claims 6 to 8.

10. An electronic part comprising the shock absorber of claim 9.
